# EUROPEAN PATENT SPECIFICATION

(11) **EP 2 701 384 B1**
(45) Date of publication and mention of the grant of the patent: **05.06.2019**
(21) Application number: 12773571.0
(22) Date of filing: 02.04.2012
(51) Int. Cl.: H04N 5/765, H04N 5/913, H04N 21/454, H04N 21/436

(54) **COMMUNICATION SYSTEM, COMMUNICATION DEVICE AND COMMUNICATION METHOD**
KOMMUNIKATIONSSYSTEM, KOMMUNIKATIONSGERÄT UND KOMMUNIKATIONSVERFAHREN
SYSTÈME DE COMMUNICATION, DISPOSITIF DE COMMUNICATION ET PROCÉDÉ DE COMMUNICATION

(30) Priority: 21.04.2011 JP 2011095165
(43) Date of publication of application: 26.02.2014
(73) Proprietor: Saturn Licensing LLC, New York, NY 10022-3211 (US)
(72) Inventor: SATO, Masahiko, Tokyo 108-0075 (JP)
(74) Representative: Witte, Weller & Partner Patentanwälte mbB
(86) International application number: PCT/JP2012/058838
(87) International publication number: WO 2012/144309

(56) References cited:
- WO-A1-2008/075618
- WO-A1-2010/005351
- JP-A- 2008 067 282
- JP-A- 2009 212 893
- JP-A- 2009 218 844
- US-A1- 2006 075 015
- TASAKA KAZUYUKI: "Implementation and Evaluation of a Collaborative Content Play Method in a Home Network", 14TH INTERNATIONAL CONFERENCE ON WEAVING APPLICATIONS INTO THE NETWORK FABRIC: THE TRANSFORMATIONAL CHALLENGE, ICIN 2010, BERLIN DE, IEEE, PISCATAWAY, NJ, USA, 11 October 2010 (2010-10-11), XP001562022,
- FASBENDER A ET AL: "Virtually at home:High-performance access to personal media", ERICSSON REVIEW (INCL. ON), TELEFONAKTIEBOLAGET L M ERICSSON, SE, vol. 2008, no. 2, 19 June 2008 (2008-06-19), pages 58-63, XP008146535, ISSN: 0014-0171
- IGNACIO MÃ Â S ET AL: "IMS-TV: An IMS-based architecture for interactive, personalized IPTV", IEEE COMMUNICATIONS MAGAZINE, IEEE SERVICE CENTER, PISCATAWAY, US, vol. 46, no. 11, 1 November 2008 (2008-11-01), pages 156-163, XP011239048, ISSN: 0163-6804, DOI: 10.1109/MCOM.2008.4689259
- DVB ORGANIZATION: "TM-IPI2383-HN_TS_Phase1_r9.doc", DVB, DIGITAL VIDEO BROADCASTING, C/O EBU - 17A ANCIENNE ROUTE - CH-1218 GRAND SACONNEX, GENEVA - SWITZERLAND, 30 January 2008 (2008-01-30), XP017811051,
- "Open IPTV Forum - Functional Architecture - V 1.1 ; OpenIPTV- Functional Architecture-V1_1-2008-01-15_", OPENIPTV- FUNCTIONAL ARCHITECTURE-V1_1-2008-01-15_APPROVED, OPEN MOBILE ALLIANCE (OMA), 4330 LA JOLLA VILLAGE DR., SUITE 110 SAN DIEGO, CA 92122 ; USA , 15 January 2008 (2008-01-15), pages 1-141, XP064030116, Retrieved from the Internet: URL:ftp/Public_documents/BCAST/2008/ [retrieved on 2008-01-30]
- BYUNGSOO LIM ET AL: "UPnP AV Transport Service Using the Add-in System", NEXT GENERATION MOBILE APPLICATIONS, SERVICES AND TECHNOLOGIES, 2009. NGMAST '09. THIRD INTERNATIONAL CONFERENCE ON, IEEE, PISCATAWAY, NJ, USA, 15 September 2009 (2009-09-15), pages 52-57, XP031569304, ISBN: 978-0-7695-3786-3

## Description

### TECHNICAL FIELD

The technology disclosed in the present specification relates to a communication system, a communication device, and a communication method that performs a content delivery service in accordance with DLNA standard or UPnP standard, and especially, relates to a communication system, a communication device, and a communication method that perform a delivery service of content to which information of ages, viewing by which is restricted, is added.

### BACKGROUND ART

Recently, most of AV content has been digitalized, and a medium that records and reproduces digital content, such as a CD and a DVD, has been widely used. In addition, distribution/delivery services of content such as images and music through a network have become popular, and content delivery is performed between remote terminals through the network without transference of a medium such as a CD and a DVD. Further, Digital Living Network Alliance (DLNA) has been standardized, in which audio-visual content digitalized based on universal plug and play (UPnP) that enables participation to the network by only connecting devices to the network is distributed at home through an Internet protocol (IP) network. With the fact above, products having functions complying with the DLNA standard and the UPnP standard have been increased in consumer electronics (CE) devices centering on audio-video equipment, and a personal computer (PC) and peripheral devices thereof.

In DLNA Guideline 1.0 (and 1.5) formulated several years ago, a connection condition of 2-Box Pull system (system usage) made of a digital media server (DMS) corresponding to a server that provides content and a digital media player (DMP) corresponding to a client that reproduces the content was defined. With the release of the guideline, products equipped with a DMS and a DMS function have been mainly spread. Further, in recently formulated DLNA Guideline 1.5, 3-Box System Usage has been defined, in which the client is made of a digital media renderer (DMR) and a digital media controller (DMC). The DMC is controlled, and content can be transmitted from the DMS to the DMR and can be reproduced. With the release of the guideline, products equipped with DMR and DMC functions have appeared.

The DMS can deliver content stored in the own storage either in the 2-Box Pull or in the 3-Box System Usage.

With spread of a broadband, services that deliver streaming of music and video content have been increased. Each of the devices (DMP, DMC, and DMR) does not directly receive content, and one device having the DMS function can receive the content, serving as a kind of proxy server, and deliver the content to other client devices. With such a utilization form, there is an advantage that the client devices such as a DMP, DMC, and DMR do not need a software module in which an authentication sequence for directly receiving the above services is incorporated, and hardware such as a tuner that receives broadcasting.

Meanwhile, there may be content including violent scenes or educationally unfavorable scenes among the pieces of content to be delivered. Therefore, a scheme is appropriately introduced, where information such as restriction for viewing based on age, recommended minimum age, or the like is attached to content, so that viewers of a certain age or less cannot view the content.

In a case of broadcasting content, in Association of Radio Industries and Businesses (ARIB) 10, for example, restricted age for viewing of a program can be indicated by inserting a predetermined descriptor "Parential rating descriptor" in an Event Information Table (EIT) that is program information.

For example, when a program, viewing of which is not allowed due to age restriction for viewing, is recorded, a user is asked to input a password and if the user fails in authentication, no sound and no image state is recorded, so that the program is kept away from a user of less than the restricted age for viewing. Further, a recording apparatus control system that cancels recording when a program, viewing of which is not allowed due to the age restriction for viewing, is attempted to be recorded has been proposed (for example, see Patent Document 1).

Further, a method has been proposed, in a network system configured from 2Box of a receiver and a recording reproduction apparatus, in which the recording reproduction apparatus that is a recording destination confirms whether control of reproduction of content is possible according to the age restriction for viewing when the content received by the receiver is recorded (for example, see Patent Document 2). According to the network system, any content received by the receiver provided with a DMS function can be reliably recorded.

Meanwhile, in a system configured from 3Box of a DMS, a DMC, and a DMR, when content received and recorded by the receiver provided with the DMS function is viewed with the DMR, reproduction control of the content according to the age restriction for viewing may not be properly performed. When the DMC is controlled and setting to the DMR is performed, the content is transmitted from the DMS to the DMR, and the reproduction/output is automatically started. However, since the DMC and the DMR do not necessarily exist in the same location, if the user fails to operate the DMC, unfavorable content may be output on an unexpected DMR (for example, on a DMR in a child's room).

### CITATION LIST

### PATENT DOCUMENT

Patent Document 1: Japanese Patent Application Laid-Open No. 2006-238278
Patent Document 2: Japanese Patent No. 4609506.

1 Non Patent Literature "Virtually at Home: High Performance access to personal media" by Fasbender discloses 3-tier UPnP with parental control, where DMC maintains control of the access control list.

US Patent Publication US2006/075015 A1 with 3-tier discloses (DMC) as the control point can filter browse images or search images displayed on the MediaRenderer (DMR).

### SUMMARY OF THE INVENTION

### PROBLEMS TO BE SOLVED BY THE INVENTION

An objective of the technology disclosed in the present specification is to provide a superior communication system, communication device, and communication method that favorably perform a delivery service of content to which information of ages, viewing by which is restricted, is added.

Another objective of the technology disclosed in the present specification is to provide a superior communication system, communication device, and communication method configured from 3Box of the DMS, DMC, and DMR, and capable of properly performing reproduction control of content according to the age restriction for viewing when the content on the DMS is reproduced with the DMR by operation from the DMC.

### SOLUTIONS TO PROBLEMS

The present disclosure is made in view of these problems, the technology according to the appended claims.

### EFFECTS OF THE INVENTION

According to the technology disclosed in the present specification, in a system configured from 3Box of a DMS, DMC, and DMR, a superior communication system, communication device, and communication method capable of properly performing reproduction control of content according to the age restriction for viewing when the content on the DMS is reproduced with the DMR by operation from the DMC can be provided.

Other objectives, characteristics, advantages of the technology disclosed in the present specification will become clear from the following more detailed description based on the embodiments below and the attached drawings.

### BRIEF DESCRIPTION OF DRAWINGS

Fig. 1 is a diagram illustrating a configuration example of a communication system based on 3-Box System Usage defined by DLNA Guideline 1.5.
Fig. 2 is a diagram schematically illustrating a functional configuration of a device that operates as a DMS in Fig. 1.
Fig. 3 is a diagram schematically illustrating a functional configuration of a device that operates as a DMC in Fig. 1.
Fig. 4 is a diagram schematically illustrating a functional configuration of a device that operates as a DMR in Fig. 1.
Fig. 5 is a diagram illustrating an example of Device Description described in an XML format.
Fig. 6A is a diagram illustrating an example of a communication sequence for performing acquisition of Device Description of the DMR and content browsing by the DMC in the 3-Box Pull System Usage.
Fig. 6B is a diagram illustrating an example of a communication sequence for performing content reproduction by the DMR in the 3-Box Pull System Usage.
Fig. 7 is a flowchart illustrating a processing procedure executed by the DMC for determining whether a reproduction/output of content can be requested to the DMR.

### MODE FOR CARRYING OUT THE INVENTION

Hereinafter, embodiments of the technology disclosed in the present specification will be described in detail with reference to the drawings.

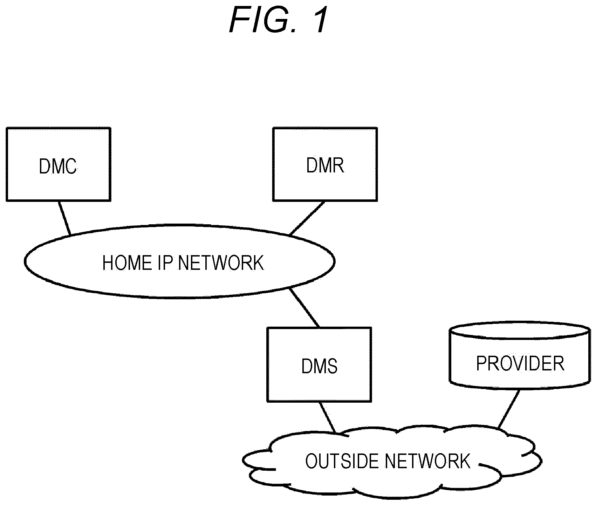

Fig. 1 illustrates a configuration example of a communication system based on the 3-Box System Usage defined by DLNA Guideline 1.5. A DMS that provides content through a home IP network, a DMR that reproduces the received content through the IP network, and a DMC that operates the DMR are connected according to a predetermined connection condition over the IP network laid at home. The DMS provides static content stored in an own storage. Further, the DMS is also connected to an outside network such as the Internet, and can provide live content acquired from a provider (content server) over the outside network.

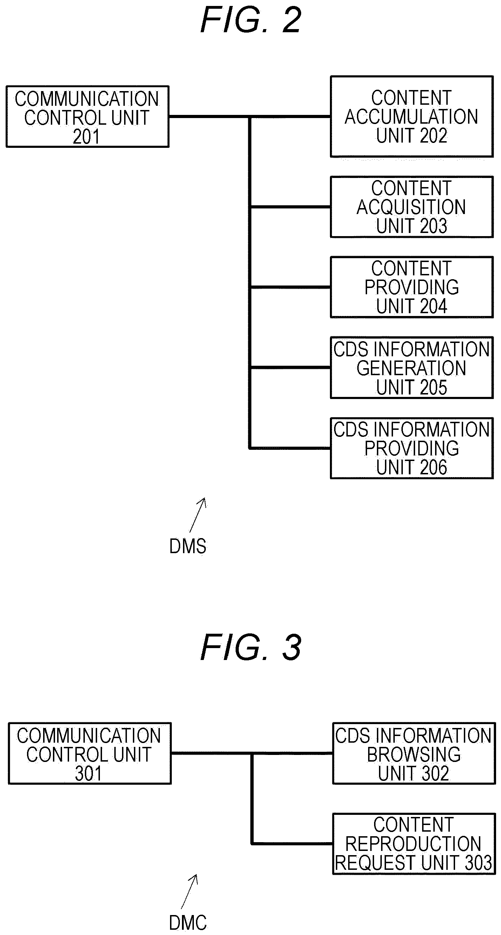

Fig. 2 schematically illustrates a functional configuration of a device that operates as the DMS in Fig. 1. Hereinafter, each unit will be described.

A communication control unit 201 controls a communication operation through the home IP network and the outside network, and generally controls an overall operation of the devices.

A content acquisition unit 203 acquires content requested from the DMR. For example, when the DMS is a receiver like a set top box (STB), the content acquisition unit 203 corresponds to a tuner, and accumulates broadcasting content in a content accumulation unit 202. In addition, the content acquisition unit 203 can acquire live content requested from the DMR from a provider through the outside network.

A content providing unit 204 provides the static content accumulated in the content accumulation unit 202 and the live content acquired from the provider to the DMR as required.

A CDS information generation unit 205 generates CDS information about the static content accumulated in the content accumulation unit 202 and the live content acquired acquired from the provider.

Here, a content directory service (CDS) is a function formulated with UPnP that serves as a base of DLNA, in which a list of content provided by a DMS and detailed information of the content are layered and delivered.

A CDS information providing unit 206 provides the CDS information generated in the CDS information generation unit 205 in response to an acquisition request of the CDS information from the DMC.

Fig. 3 schematically illustrates a functional configuration of a device that operates as the DMC in Fig. 1. Hereinafter, each unit will be described.

A communication control unit 301 controls a communication operation through the home IP network and generally controls an overall operation of the devices.

A CDS information browsing unit 302 performs an acquisition request of the CDS information to the DMS, and displays a browsing screen of the acquired CDS information. For example, when it is desired to acquire a list of content that is providable by the DMS (or acquirable through the DMS) as the CDS information, a content list screen is displayed, and the user can select content that the user wishes to reproduce/output, through the list screen.

A content reproduction request unit 303 requests reproduction/output of the content selected by the user to the DMR. The content reproduction request unit 303 also performs reproduction control according to the age restriction for viewing when requesting the reproduction/output of the content to the DMR. Details of this point will be described below.

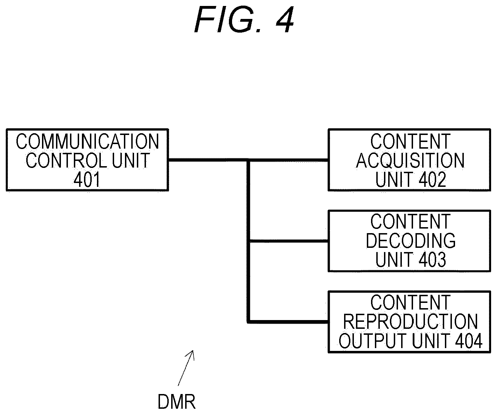

Fig. 4 schematically illustrates a functional configuration of a device that operates as the DMR in Fig. 1. Hereinafter, each unit will be described.

A communication control unit 401 controls a communication operation through the home IP network and generally controls an overall operation of the devices.

A content acquisition unit 402 transmits, to the DMS, an acquisition request of the content that the DMC has requested the reproduction and acquires the content. A content decoding unit 403 then decodes the acquired content, and a content reproduction output unit 404 reproduces and outputs the decoded content.

Note that, for simplification of the drawings, only one DMS, DMC, and DMR each are drawn in Fig. 1. However, two or more DMSs, DMCs, and DMRs may be connected to the home IP network.

In a case of broadcasting content, in Association of Radio Industries and Businesses (ARIB) 10, for example, the restricted age for viewing of a program can be indicated by inserting a 6.2.12 Parential rating descriptor into 5.2.7 Event Information Table (EIT) that is program information.

For example, in a case where broadcasting content received by a receiver is viewed by a television receiver, when the above-described descriptor "Parential rating descriptor" is detected in the receiver, a message that prompts an input of a personal identification number is output on a screen of the television receiver as necessary. The personal identification number input by the user through a remote control operation and the like is checked against a personal identification number registered in advance, so that the restriction for viewing based on age of the content can be performed.

In a case of the system of 2Box configured from a receiver and a recording reproduction apparatus, as described in Patent Document 2, when content received by the receiver is recorded, the recording reproduction apparatus that is a recording destination confirm whether control of reproduction of the content is possible according to the age restriction for viewing. Accordingly, when the content is reproduced in the recording reproduction apparatus later, the restriction for viewing based on age of the content can be properly performed.

In contrast, in the case of a system configured from 3Box of a DMS, DMC, and DMR as illustrated in Fig. 1, when setting to the DMR is performed by control of the DMC, the content is transmitted from the DMS to the DMR, and the reproduction/output is automatically started. However, since the DMC and the DMR do not necessarily exist in the same location, if the user fails to operate the DMC, unfavorable content may be output on an unexpected DMR (for example, on a DMR in a child's room).

Therefore, the technology disclosed in the present specification keeps the DMC from carelessly outputting content having the age restriction for viewing on the DMR by introducing the following scheme.

(1) Whether the age restriction for viewing is imposed on content is provided by the DMS using meta-information. In response, the DMC acquires the meta-information of content, reproduction of which is intended to request to the DMR, and confirms whether the content has the age restriction for viewing.
(2) The DMC acquires information related to the type of device from the DMR to which the content reproduction is requested, and determines whether it is a device capable of controlling reproduction of the content according to the age restriction for viewing.
(3) The DMC compares the information related to the age restriction for viewing of the content and the information related to the type of device of the DMR to determine whether reproduction of the content is requested to the DMR.

First, a method of confirming whether content has the age restriction for viewing will be described.

In UPnP, which is a base of DLNA, a CDS function is formulated, in which a list of content provided by the DMS and detailed information of the content are layered and delivered. As described above, at the DMS side, the CDS information generation unit 205 generates the CDS information about the content accumulated in the content accumulation unit 202, and the CDS information providing unit 206 provides the CDS information in response to the acquisition request from the DMS. In addition, the CDS information generation unit 205 generates CDS information about live content acquired acquired from a provider. Meanwhile, at the DMC side, the CDS information browsing unit 302 performs an acquisition request of the CDS information to the DMS.

As a meta-data item written in Appendix B of "Content Directory: 1 Service Template Version 1.01" specified in UPnP, there is a "rating field". At the DMS side, the CDS information generation unit 205 writes information related to a target age for viewing of content in this field, so that the "Parental Rating" of the content, that is, the age restriction for viewing can be disclosed. Then, the DMC side acquires the CDS information and refers to contents of the description in the field, so that, the DMC side can confirm whether the content is imposed the age restriction for viewing.

Next, information related to the type of device of the DMR will be described.

"Device Description" specified in a document "Basic: 1.0 Device Description Version 1.0 For UPnPTM Version 1.0" of an organization "UPnP Forum" who creates specification of UPnP and the like is information for defining the type of device (device type) specified in UPnP. The Device Description is stored in an internal memory (not illustrated) of the communication control unit 401 of the DMR, for example. The DMR presents its own capability related to the age restriction for viewing by inserting information that indicates whether reproduction control of content according to the age restriction for viewing is possible into the Device Description (hereinafter, also referred to as "DD") . Meanwhile, the DMC reads out the Device Description from the DMR to which reproduction of the content is requested, and can confirm whether the device is capable of controlling reproduction of the content according to the age restriction for viewing.

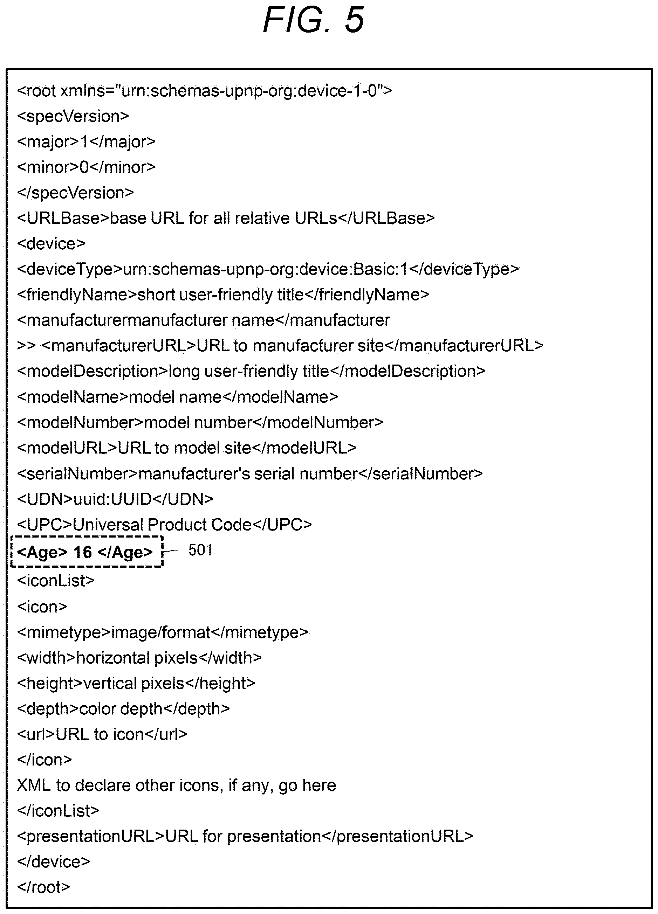

Fig. 5 is an example of the Device Description described in an XML (eXtensible Markup Language) format. A tag field is inserted into a region 501 in the illustrated Device Description, the tag field indicating whether a device is capable of controlling reproduction of content according to the age restriction for viewing.

In the region 501, a field of "Age" is provided, and an allowable age for viewing of the DMR is written in the field. When the description is "<Age>16</Age>", as illustrated in the drawing, it means that a user of 16 years or more views the DMR (that is, the youngest user who views the DMR is 16 years old).

When the DMC reads out a value of the Age field from the Device Description acquired from the DMR, the DMC compares the value and the age restriction for viewing described in the meta item "rating" of the CDS of the content. Then, if the value of the Age field is larger than the age restriction for viewing, it can be determined that the age restriction for viewing is satisfied if the content is reproduced on the DMR.

Note that the setting of the value of the Age field is performed through a setting menu of the DMR. At that time, a person who sets the value is restricted by requesting an input of a personal identification number (PIN) and the like, so that the setting cannot be recklessly changed.

Alternatively, to indicate whether a device is capable of controlling reproduction of content according to the age restriction for viewing is possible, a "parentalCont" tag may be used in place of the "Age" tag. For example, when "<parentalCont>yes</parentalCont>" is described in the region 501, the DMR asks the user to input a password when content having the age restriction for viewing is reproduced and output. When "yes" is described in the parentalCont field in the Device Description acquired from the DMR, the DMC requests reproduction of content, while, when "no" is described, the DMC does not request reproduction of the content.

Next, a method of acquiring the information related to the type of device from the DMR by other devices such as the DMC, other than the DMR, will be described.

The Device Description illustrated in Fig. 5 is stored in an internal memory (not illustrated) of the communication control unit 401 of the DMR. The Device Description is, for example, stored in a memory before shipment of the DMR.

In addition, the DMR transmits a uniform resource locator (URL) that is address information for identifying a stored position of the Device Description in the internal memory, and the like, to the network from the communication control unit 401 as necessary.

In UPnP, a simple service discover protocol (SSDP) is specified as a service for detecting a device over the network (home IP network). The DMR multicasts the URL for identifying the stored position of the Device Description along with information identifying the DMR itself and the like according to the SSDP protocol. Note that, for details of the SSDP, refer to a document "UPnP Device Architecture 1.0" of UPnP Forum.

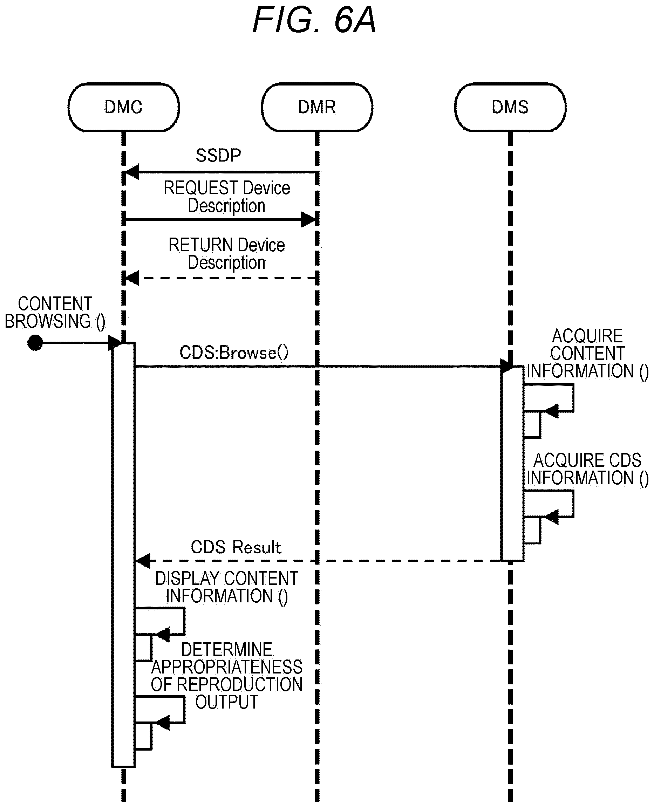

Fig. 6A illustrates an example of a communication sequence for performing acquisition of Device Description of the DMR and content browsing by the DMC in the 3-Box Pull System Usage.

The DMR multicasts the URL for identifying the stored position of the Device Description along with the information identifying the DMR itself and the like according to the SSDP protocol.

When having received a multicasted message according to the SSDP protocol, the DMC requests the Device Description to the DMR based on the URL described therein and receives the Device Description. The DMC then acquires the value described in the "Age" field in the Device Description. For example, the DMC acquires the Device Description by processing of the communication control unit 301 in the DMC.

Further, in content browsing, a CDS: Browse action is issued from the CDS information browsing unit 302 of the DMC to the DMS.

At the DMS side, since the CDS: Browse action is issued to the content stored in the content accumulation unit 202 that is the own storage, the CDS information generation unit 205 acquires content information related to the appropriate content from the internal database of the content accumulation unit 202 to generate CDS information. The CDS information providing unit 206 then returns the generated CDS information to the DMC as a CDS Result.

At the DMC side, the CDS information browsing unit 302 analyzes the received CDS Result, and displays the content information including meta-information such as a title of the content and a URL for acquiring the content. The user of the DMC can select content that the user wishes to reproduce from the list of content.

Further, at the DMC side, the CDS information browsing unit 302 refers to the "Parental Rating" field in the CDS information, and acquires information related to the target age of the content. The DMC then determines whether reproduction/output of the content can be requested to the DMR based on the value described in the "Age" field in the Device Description and the information related to the target age of the content acquired from the "Parental Rating" field in the CDS information. Details of the determination processing will be described below.

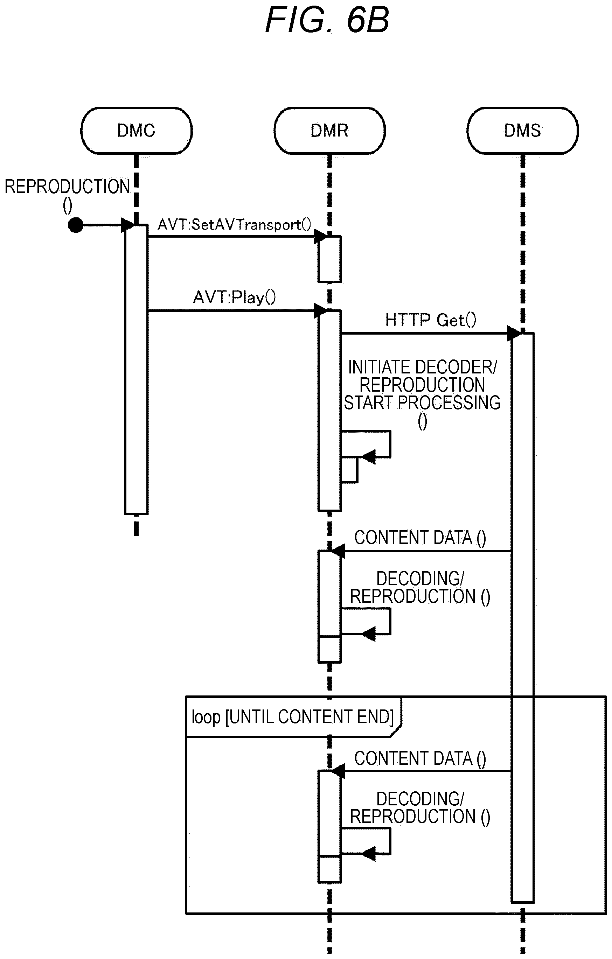

Fig. 6B illustrates an example of a communication sequence for performing content reproduction by the DMR in the 3-Box System Usage. Hereinafter, it is assumed that the DMC has determined that the reproduction/output of the content can be requested to the DMR.

At the reproduction, the content reproduction request unit 303 of the DMC issues an AVT: SetAVTransportURI() action to the DMR, and notifies attribution information of the selected content. The attribution information of the content includes a title of the content, a size of the content, a length of the content, a URL for accessing the content, and the like. Further, the content reproduction request unit 503 issues an AVT: Play() action to the DMR to request reproduction start of the content.

The content acquisition unit 402 of the DMR requests the content using an HTTP Get method in response to the reproduction start request of the content from the DMC. At the DMS side, when having received the HTTP Get request, the content providing unit 204 returns (delivers) content data stored in the content accumulation unit 202 that is the own storage to the DMP by a constant capacity. At the DMR side, the content decoding unit 403 then decodes the received data, and the content reproduction output unit 404 reproduces the decoded data. Until reaching the end of the content data, the delivery of the content data from the DMS and the decoding and reproduction at the DMR side are repeated.

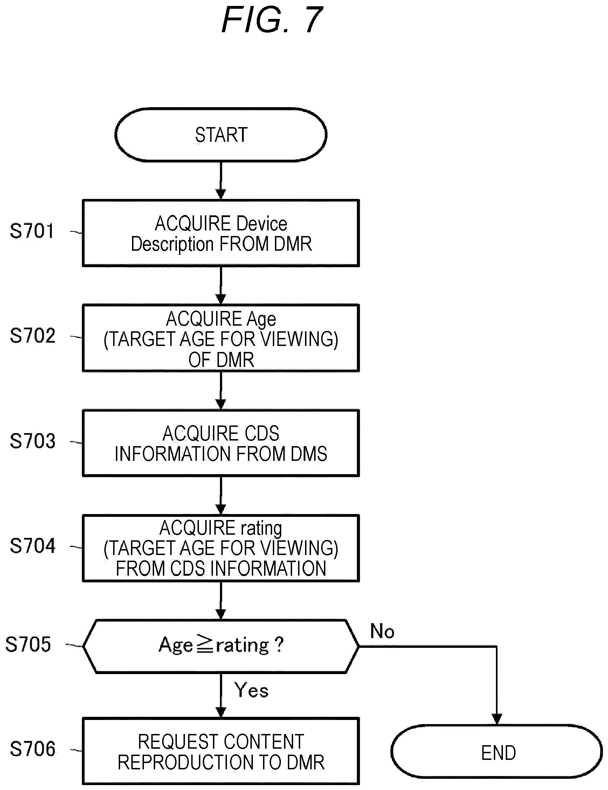

Fig. 7 illustrates a processing procedure executed by the DMC for determining whether a reproduction/output of content can be requested to the DMR in the form of a flowchart. The illustrated processing procedure is realized, for example, by a configuration in which a predetermined program is executed in the communication control unit 301 in the DMC.

When the DMC acquires the Device Description from the DMR (step S701), the DMC acquires the value described in the "Age" field in the Device Description, that is, the age restriction for viewing of the DMR (step S702) . Since the information identifying the DMR itself and the URL for identifying the stored position of the Device Description are multicasted by the DMR, the DMC can request the Device Description using the URL (described above).

Next, the DMC requests browsing of CDS information of content that the DMC wishes to reproduce to the DMS (step S703) . The DMC issues the CDS: Browse action to the DMS to request browsing of the CDS information (described above). The DMC then acquires the information related to a target age of the content by referring to the "Parental Rating" field in the CDR information returned as a CDS Result (step S704).

Next, the DMC compares large or small of the value read out from the Age field in the Device Description, that is, the age restriction for viewing of the DMR, and the target age for viewing described in the "Parental Rating" field in the CDS information (step S705).

Here, when the age restriction for viewing of the DMR is equal to or more than the target age for viewing of the content (Yes at step S705), the DMC requests reproduction of the content to the DMR (step S706). The DMC issues the AVT: SetAVTransportURI() action to the DMR, and further, issues the AVT: Play() action to request reproduction start of the content (described above).

Meanwhile, when the age restriction for viewing of the DMR is smaller than the target age for viewing of the content (No at step S705), the DMC terminates the processing routine to comply with the age restriction for viewing of the content without requesting reproduction of the content to the DMR.

By being operated according to the processing procedure illustrated in Fig. 7, the DMC does not carelessly output a program having the age restriction for viewing on the DMR when viewing a program with the 3Box, whereby harmless uses of content becomes possible.

### INDUSTRIAL APPLICABILITY

As described above, specific embodiments concerning the technology disclosed in the present specification have been described in detail. However, it will be obvious to those skilled in the art that modifications and changes may be made without departing from the scope of the technology disclosed in the present specification.

While an embodiment has been mainly described, in which the present technology is applied to the 3-Box System Usage of DLNA, the spirit and scope of the technology disclosed in the present specification are not limited thereto. By implementing a scheme in which the DMC can acquire meta-information related to the age restriction for viewing of content accumulated in the DMS, and the information related to appropriateness of the reproduction control according to the age restriction for viewing of the DMR, the present technology can be applied to various types of communication systems.

Further, while an embodiment has been described in the specification, in which a delivery service of contents on which the Parental rating, that is, the age restriction for viewing is imposed is provided, the scope of the present technology are not limited by the embodiment. By describing the type of content in the CDS information of the content, and by writing allowance for viewing with respect to the type of content in the Device Description of the DMR, the DMC determines appropriateness of the reproduction/output of the content to the DMR based on the above description, whereby the present technology is similarly applicable. Examples of the type of content that should be restricted for viewing include something violent and sexual. As to content including something violent and sexual, "violent, sex" is clearly described in the meta-data item "content" in the CDS information. In addition, tag fields of "violent" and "sex" are provided in the Device Description of the DMR, and when the DMR allows the reproduction of content that includes something violent, "<violent>yes</violent>" is described, and when prohibits reproduction of content including something sexual, "<sex>no</sex>" is described. The DMC then compares the both and determines appropriateness of the reproduction/output to the DMR according to the type of content.

Element on the CDS <content>violent, sex</content>
Element on the CDS:
<content>violent, sex</content>
Element on the Device Description:
<violent>yes</violent>, <sex>no</sex>

In short, the technology disclosed in the present specification has been disclosed in a form of example, and the contents of the description of the present specification should not be construed in a limited manner. Claims are to be considered to determine the scope of the present technology.

### REFERENCE SIGNS LIST

- 201: Communication control unit
- 202: Content accumulation unit
- 203: Content acquisition unit
- 204: Content providing unit
- 205: CDS information generation unit
- 206: CDS information providing unit
- 301: Communication control unit
- 302: CDS information browsing unit
- 303: Content reproduction request unit
- 401: Communication control unit
- 402: Content acquisition unit
- 403: Content decoding unit
- 404: Content reproduction output unit

## Claims

1. A communication system comprising:
a server configured to provide content;
a reproduction apparatus configured to reproduce the content provided by the server; and
a reproduction control apparatus configured to control reproduction of the content on the reproduction apparatus,
wherein the reproduction control apparatus is a DMC according to the DLNA Standard or UPnP Standard, which acquires a type of the content provided by the server and a type of allowed content, viewing of which is allowed by the reproduction apparatus, and requests reproduction of content having the type, viewing of which is allowed by the reproduction apparatus to the reproduction apparatus,
wherein the server is a DMS operating according to DLNA Standard or UPnP Standard, which provides CDS information with a parental rating, disclosing information related to a target age for viewing as the type of content,
wherein the reproduction apparatus is a DMR operating according to the DLNA Standard or the UPnP Standard, which inserts an age field into a Device Description, comprising information related to an allowable age for viewing of content to be reproduced, and
wherein the reproduction control apparatus is configured to compare the allowable age for viewing described in the age field in the Device Description of the DMR and the target age for viewing provided in the CDS information as the parental rating, and allow a reproduction request of content having a target age for viewing equal to or less than the allowable age for viewing to the reproduction apparatus.

2. A communication device, being a DMC according to the DLNA Standard or UPnP Standard, comprising:
a browsing request unit configured to request browsing of detailed information of content from a server configured to provide the content;
a reproduction request unit configured to request reproduction of the content provided by the server to a reproduction apparatus; and
a control unit configured to control allowability of the reproduction request of the content to the reproduction apparatus by the reproduction request unit,
wherein the Server is a DMS operating according to DLNA Standard or UPnP Standard, which provides CDS information with a parental rating disclosing information related to a target age for viewing as the type of content,
wherein the reproduction apparatus is a DMR operating according to the DLNA Standard or the UPnP Standard, which inserts an age field into a Device Description, comprising information relating to an allowable age for viewing of content to be reproduced, and
wherein the control unit is configured to acquire the allowable age for viewing described in the age field in the Device Description of the DMR as a type of allowed content, viewing of which is allowed by the reproduction apparatus,
wherein the control unit is configured to compare the allowable age for viewing described in the age field in the Device Description of the DMR and the target age for viewing provided in the CDS information as the parental rating in the detailed information of content requested for browsing, to determine the allowability of the reproduction request of the content to the reproduction apparatus, and allow a reproduction request of content having a target age for viewing equal to or less than the allowable age for viewing to the reproduction apparatus.

3. The communication device according to claim 2, wherein the server discloses information related to a target age for viewing as the type of content included in the detailed information of content to be provided,
the reproduction apparatus has information related to an allowable age for viewing of the content to be reproduced, and
the control unit allows the reproduction request of content having the target age for viewing satisfying the allowable age for viewing of the reproduction apparatus.

4. A communication method comprising the steps of:
acquiring detailed information of content from a Server configured to provide the content;
acquiring, from a reproduction apparatus to which reproduction of the content provided by the Server is requested, a type of content, viewing of which is allowed by the reproduction apparatus; and
comparing the type of content included in the acquired detailed information of content and the type of allowed content, viewing of which is allowed by the reproduction apparatus, to determine allowability of the reproduction request of the content to the reproduction apparatus,
wherein the Server is a DMS operating according to DLNA Standard or UPnP Standard, which provides CDS information with a parental rating, disclosing information related to a target age for viewing as the type of content,
wherein the reproduction apparatus is a DMR operating according to the DLNA Standard or the UPnP Standard, which inserts an age field into a Device Description, comprising information related to an allowable age for viewing of content to be reproduced, and
wherein comparing the type of content includes comparing the allowable age for viewing described in the age field in the Device Description of the DMR and the target age for viewing provided in the CDS information as the Parental rating, and allowing a reproduction request of content having a target age for viewing equal to or less than the allowable age for viewing to the reproduction apparatus.

## Patentansprüche

1. Kommunikationssystem, aufweisend:
einen Server, der dazu ausgebildet ist, Inhalt bereitzustellen;
eine Wiedergabevorrichtung, die dazu ausgebildet ist, den durch den Server bereitgestellten Inhalt wiederzugeben; und
eine Wiedergabesteuervorrichtung, die dazu ausgebildet ist, die Wiedergabe des Inhalts auf der Wiedergabevorrichtung zu steuern,
wobei die Wiedergabesteuervorrichtung ein DMC gemäß dem DLNA-Standard oder dem UPnP-Standard ist, der einen Typ des durch den Server bereitgestellten Inhalts und einen Typ von zulässigem Inhalt erfasst, dessen Ansehen durch die Wiedergabevorrichtung zugelassen wird, und eine Wiedergabe von Inhalt von dem Typ, dessen Ansehen durch die Wiedergabevorrichtung auf der Wiedergabevorrichtung zugelassen wird, anfordert,
wobei der Server ein DMS ist, der gemäß dem DLNA-Standard oder dem UPnP-Standard betrieben wird, CDS-Informationen mit einer Altersfreigabe bereitstellt und Informationen bezüglich eines vorgegebenen Alters zum Ansehen als den Typ von Inhalt bekanntgibt,
wobei die Wiedergabevorrichtung ein DMR ist, der gemäß dem DLNA-Standard oder dem UPnP-Standard betrieben wird, ein Altersfeld in eine Device Description einfügt und Informationen bezüglich eines zulässigen Alters zum Ansehen von wiederzugebendem Inhalt aufweist, und
wobei die Wiedergabesteuervorrichtung dazu ausgebildet ist, das im Altersfeld in der Device Description des DMR beschriebene zulässige Alter zum Ansehen und das in den CDS-Informationen als die Altersfreigabe bereitgestellte vorgegebene Alter zum Ansehen zu vergleichen und eine Wiedergabeanforderung von Inhalt mit einem vorgegebenen Alter zum Ansehen, das dem zulässigen Alter zum Ansehen auf der Wiedergabevorrichtung entspricht oder dieses unterschreitet, zuzulassen.

2. Kommunikationseinrichtung, bei der es sich um einen DMC gemäß dem DLNA-Standard oder dem UPnP-Standard handelt, aufweisend:
eine Suchanforderungseinheit, die dazu ausgebildet ist, ein Durchsuchen detaillierter Informationen von Inhalt von einem Server, der dazu ausgebildet ist, den Inhalt bereitzustellen, anzufordern;
eine Wiedergabeanforderungseinheit, die dazu ausgebildet ist, eine Wiedergabe des durch den Server bereitgestellten Inhalts auf einer Wiedergabevorrichtung anzufordern; und
eine Steuereinheit, die dazu ausgebildet ist, die Zulässigkeit der Wiedergabeanforderung des Inhalts auf der Wiedergabevorrichtung durch die Wiedergabeanforderungseinheit zu steuern,
wobei der Server ein DMS ist, der gemäß dem DLNA-Standard oder dem UPnP-Standard betrieben wird, CDS-Informationen mit einer Altersfreigabe bereitstellt und Informationen bezüglich eines vorgegebenen Alters zum Ansehen als den Typ von Inhalt bekanntgibt,
wobei die Wiedergabevorrichtung ein DMR ist, der gemäß dem DLNA-Standard oder dem UPnP-Standard betrieben wird, ein Altersfeld in eine Device Description einfügt und Informationen bezüglich eines zulässigen Alters zum Ansehen von wiederzugebendem Inhalt aufweist, und
wobei die Steuereinheit dazu ausgebildet ist, ein zulässiges Alter zum Ansehen , das in einem Altersfeld in der Device Description des DMR beschrieben ist, als einen Typ von zulässigem Inhalt, dessen Ansehen durch die Wiedergabevorrichtung zugelassen wird, zu erfassen,
wobei die Steuereinheit dazu ausgebildet ist, das im Altersfeld in der Device Description des DMR beschriebene zulässige Alter zum Ansehen und das in den CDS-Informationen als die Altersfreigabe in der detaillierten Information von Inhalt, dessen Durchsuchen angefordert wird, bereitgestellte vorgegebene Alter zum Ansehen zu vergleichen, die Zulässigkeit der Wiedergabeanforderung des Inhalts auf der Wiedergabevorrichtung zu bestimmen, und eine Wiedergabeanforderung von Inhalt mit einem vorgegebenen Alter zum Ansehen, das dem zulässigen Alter zum Ansehen auf der Wiedergabevorrichtung entspricht oder dieses unterschreitet, zuzulassen.

3. Kommunikationseinrichtung nach Anspruch 2, wobei der Server Informationen bezüglich eines vorgegebenen Alters zum Ansehen als den Typ von Inhalt, der in den detaillierten Informationen von bereitzustellendem Inhalt enthalten ist, bekanntgibt,
die Wiedergabevorrichtung über Informationen bezüglich eines zulässigen Alters zum Ansehen des wiederzugebenden Inhalts verfügt und
die Steuereinheit die Wiedergabeanforderung von Inhalt, dessen vorgegebenes Alter zum Ansehen mit dem zulässigen Alter zum Ansehen der Wiedergabevorrichtung vereinbar ist, zulässt.

4. Kommunikationsverfahren, aufweisend folgende Schritte:
Erfassen detaillierter Informationen von Inhalt von einem Server, der dazu ausgebildet ist, den Inhalt bereitzustellen;
Erfassen eines Typs von Inhalt, dessen Ansehen durch die Wiedergabevorrichtung zugelassen wird, von einer Wiedergabevorrichtung, auf der eine Wiedergabe des durch den Server bereitgestellten Inhalts angefordert wird; und
Vergleichen des Typs von Inhalt, der in den erfassten detaillierten Informationen von Inhalt enthalten ist, und des Typs von zulässigem Inhalt, dessen Ansehen durch die Wiedergabevorrichtung zugelassen wird, um die Zulässigkeit der Wiedergabeanforderung des Inhalts auf der Wiedergabevorrichtung zu bestimmen,
wobei der Server ein DMS ist, der gemäß dem DLNA-Standard oder dem UPnP-Standard betrieben wird, CDS-Informationen mit einer Altersfreigabe bereitstellt und Informationen bezüglich eines vorgegebenen Alters zum Ansehen als den Typ von Inhalt bekanntgibt,
wobei die Wiedergabevorrichtung ein DMR ist, der gemäß dem DLNA-Standard oder dem UPnP-Standard betrieben wird, ein Altersfeld in eine Device Description einfügt und Informationen bezüglich eines zulässigen Alters zum Ansehen von wiederzugebendem Inhalt aufweist, und
wobei das Vergleichen des Typs von Inhalt Vergleichen des im Altersfeld in der Device Description des DMR beschriebenen zulässigen Alters zum Ansehen und des in den CDS-Informationen als die Altersfreigabe bereitgestellten vorgegebenen Alters zum Ansehen und Zulassen einer Wiedergabeanforderung von Inhalt mit einem vorgegebenen Alter zum Ansehen, das dem zulässigen Alter zum Ansehen auf der Wiedergabevorrichtung entspricht oder dieses unterschreitet, aufweist.

## Revendications

1. Système de communication comprenant :
un serveur configuré pour fournir un contenu ;
un appareil de reproduction configuré pour reproduire le contenu fourni par le serveur ; et
un appareil de commande de reproduction configuré pour commander la reproduction du contenu sur l'appareil de reproduction,
l'appareil de commande de reproduction étant un DMC selon la norme DLNA ou la norme UPnP, qui acquiert un type du contenu fourni par le serveur et un type de contenu autorisé, dont la visualisation est autorisée par l'appareil de reproduction, et demande la reproduction d'un contenu ayant le type, dont la visualisation est autorisée par l'appareil de reproduction à l'appareil de reproduction,
le serveur étant un DMS fonctionnant selon la norme DLNA ou la norme UPnP, qui fournit des informations CDS ayant un classement parental, décrivant des informations relatives à un âge cible pour une visualisation en tant que type de contenu,
l'appareil de reproduction étant un DMR fonctionnant selon la norme DLNA ou la norme UPnP, qui insère un champ d'âge dans une description de dispositif, comprenant des informations relatives à un âge admissible pour la visualisation d'un contenu devant être reproduit, et
l'appareil de commande de reproduction étant configuré pour comparer l'âge admissible pour une visualisation décrit dans le champ d'âge dans la description de dispositif du DMR et l'âge cible pour une visualisation fourni dans les informations CDS en tant que classement parental, et autoriser une demande de reproduction de contenu ayant un âge cible pour une visualisation égal ou inférieur à l'âge admissible pour une visualisation à l'appareil de reproduction.

2. Dispositif de communication, qui est un DMC selon la norme DLNA ou la norme UPnP, comprenant :
une unité de demande de navigation configurée pour demander la navigation parmi des informations détaillées de contenu à partir d'un serveur configuré pour fournir le contenu ;
une unité de demande de reproduction configurée pour demander la reproduction du contenu fourni par le serveur à un appareil de reproduction ; et
une unité de commande configurée pour commander l'admissibilité de la demande de reproduction du contenu à l'appareil de reproduction par l'unité de demande de reproduction,
le serveur étant un DMS fonctionnant selon la norme DLNA ou la norme UPnP, qui fournit des informations CDS ayant un classement parental, décrivant des informations relatives à un âge cible pour une visualisation en tant que type de contenu,
l'appareil de reproduction étant un DMR fonctionnant selon la norme DLNA ou la norme UPnP, qui insère un champ d'âge dans une description de dispositif, comprenant des informations relatives à un âge admissible pour la visualisation d'un contenu à reproduire,
et
l'unité de commande étant configurée pour acquérir l'âge admissible pour une visualisation décrit dans le champ d'âge dans la description de dispositif du DMR en tant que un type de contenu autorisé dont la visualisation est autorisée par l'appareil de reproduction,
l'unité de commande étant configurée pour comparer l'âge admissible pour une visualisation décrit dans le champ d'âge dans la description de dispositif du DMR et l'âge cible pour une visualisation fourni dans les informations CDS en tant que classement parental dans les informations détaillées du contenu demandé pour une navigation, déterminer l'admissibilité de la demande de reproduction du contenu à l'appareil de reproduction, et autoriser une demande de reproduction de contenu ayant un âge cible pour une visualisation égal ou inférieur à l'âge admissible pour une visualisation à l'appareil de reproduction.

3. Dispositif de communication selon la revendication 2, le serveur décrivant des informations relatives à un âge cible de visualisation en tant que type de contenu inclus dans les informations détaillées de contenu à fournir,
l'appareil de reproduction comprenant des informations relatives à un âge admissible pour la visualisation du contenu à reproduire, et
l'unité de commande autorisant la demande de reproduction de contenu ayant l'âge cible pour la visualisation satisfaisant l'âge admissible pour la visualisation de l'appareil de reproduction.

4. Procédé de communication comprenant les étapes consistant à :
l'acquisition d'informations détaillées de contenu à partir d'un serveur configuré pour fournir le contenu ;
l'acquisition, à partir d'un appareil de reproduction auquel la reproduction du contenu fourni par le serveur est demandée, d'un type de contenu, dont la visualisation est autorisée par l'appareil de reproduction ; et
la comparaison du type de contenu inclus dans les informations détaillées acquises du contenu et du type de contenu autorisé, dont la visualisation est autorisée par l'appareil de reproduction, afin de déterminer l'admissibilité de la demande de reproduction du contenu à l'appareil de reproduction,
le serveur étant un DMS fonctionnant selon une norme DLNA ou une norme UPnP, qui fournit des informations CDS ayant un classement parental, décrivant des informations relatives à un âge cible pour une visualisation en tant que type de contenu,
l'appareil de reproduction étant un DMR fonctionnant selon la norme DLNA ou la norme UPnP, qui insère un champ d'âge dans une description de dispositif, comprenant des informations relatives à un âge admissible pour la visualisation d'un contenu à reproduire,
et
la comparaison du type de contenu comprenant la comparaison de l'âge admissible pour une visualisation décrit dans le champ d'âge dans la description de dispositif du DMR et de l'âge cible pour une visualisation fourni dans les informations CDS en tant que classement parental, et l'autorisation d'une demande de reproduction de contenu ayant un âge cible pour une visualisation égal ou inférieur à l'âge admissible pour une visualisation à l'appareil de reproduction.
